# FASCICULE DE BREVET EUROPEEN

(11) **EP 0 603 355 B1**
(45) Date de publication et mention de la délivrance du brevet: **13.09.1995**
(21) Numéro de dépôt: 93912891.4
(22) Date de dépôt: 04.06.1993
(51) Int. Cl.: F16D 55/2265, F16B 33/00

(54) **DISPOSITIF DE GUIDAGE D'ETRIER COULISSANT POUR FREIN A DISQUE**
FÜHRUNGSELEMENT EINES VERSCHIEBBAREN SATTELS FÜR SCHEIBENBREMSE
DEVICE FOR GUIDING THE SLIDING CALIPER IN A DISK BRAKE

(30) Priorité: 10.07.1992 ES 9201426
(43) Date de publication de la demande: 29.06.1994
(73) Titulaire: ALLIEDSIGNAL AUTOMOTIVE ESPANA, S.A., 08400 Barcelona (ES)
(72) Inventeur: VILA BOLUDA, J. Manuel, E-08520 Barcelone (ES)
(74) Mandataire: Bentz, Jean-Paul
(86) Numéro de dépôt international: EP9301419
(87) Numéro de publication internationale: WO9401693

(56) Documents cités:
- EP-A- 0 046 432
- EP-A- 0 052 543
- EP-A- 0 297 497
- DE-A- 4 025 812
- US-A- 4 475 633
- US-A- 4 641 730

## Description

La présente invention concerne un dispositif de guidage d'étrier coulissant pour frein à disque, comprenant :
- un support ;
- une vis comportant une tête dont la rotation permet d'engager cette vis dans un taraudage pratiqué dans le support pour la rendre solidaire de ce dernier ;
- une colonnette creuse essentiellement cylindrique, traversée longitudinalement et à faible jeu par la vis et bloquée axialement entre le support et la tête de vis ;
- et des premiers moyens de blocage, propres à empêcher la rotation de la colonnette autour de son axe longitudinal, et coopérant avec des méplats pratiqués sur la surface externe de cette colonnette.

Des dispositifs de ce type sont utilisés depuis longtemps dans l'art antérieur, comme le montrent par exemple les brevets US 4 475 633 et US 4 641 730.

Cependant les moyens de blocage en rotation de la colonnette dans les systèmes connus sont traditionnellement constitués par une double fourchette dont chaque extrémité bloque en rotation une colonnette correspondante.

Or, bien que les systèmes connus de ce type donnent toute satisfaction pour des freins à disque comportant deux colonnettes semblables relativement proches l'une de l'autre, le recours à une double fourchette devient impossible dans des freins à colonnette unique, ou dont les colonnettes sont structurellement différentes et/ou éloignées l'une de l'autre.

En outre, il est apparu que pour des freins soumis à des contraintes élevées, et notamment pour les freins de véhicules industriels de taille importante, le seul blocage de la colonnette en rotation ne suffisait pas à garantir l'absence de contraintes sur le dispositif de guidage, que ce soit au montage ou en opération.

Dans ce contexte, l'invention a pour but de proposer un dispositif de guidage d'étrier coulissant pour frein à disque, agencé de manière à en réduire les contraintes.

A cette fin, le dispositif de l'invention est essentiellement caractérisé en ce que les méplats sont pratiqués à l'extrémité de la colonnette qui est tournée vers le support et en ce que les premiers moyens de blocage comprennent :
- un alésage circulaire du support, concentrique avec le taraudage qui reçoit la vis ;
- une bague ouverte présentant un profil externe partiellement circulaire se logeant à faible jeu dans l'alésage du support et un profil interne formant deux surfaces d'appui parallèles recevant à coulissement les méplats de la colonnette, et
- des seconds moyens de blocage assurant le blocage en rotation de la bague par rapport au support.

Grâce à cette structure, non seulement l'extrémité de la colonnette qui est au voisinage du support est bloquée en rotation, et avec elle toute la colonnette, et autorisée à coulisser à l'intérieur du profil interne de la bague pour rattraper toutes les tolérances de fabrication, mais cette extrémité est en outre maintenue dans un sens perpendiculaire aux surfaces d'appui du profil interne de la bague ouverte, ce qui garantit que la colonnette tend toujours à prendre une position optimale parallèle à la vis au lieu d'adopter une position oblique, génératrice de contraintes.

Par ailleurs, de préférence, les seconds moyens de blocage comprennent une extension axiale et/ou radiale s'engageant dans une cavité complémentaire, l'une quelconque de l'extension et de la cavité appartenant à la bague ouverte, et l'autre au support, un téton porté par la bague ouverte constituant par exemple une extension axiale possible.

D'autres avantages de l'invention ressortiront clairement de la description qui en est faite ci-après, à titre indicatif et nullement limitatif, en référence au dessin annexé sur lequel :
- La figure 1 est une vue en coupe longitudinale d'un dispositif de guidage conforme à l'invention ;
- La figure 2 est une vue en coupe de ce dispositif, suivant la ligne II-II de la figure 1 ;
- La figure 3 est une vue analogue à la figure 1, illustrant un second mode de réalisation ;
- La figure 4 est une vue analogue à la figure 2, illustrant ce second mode de réalisation ;
- La figure 5 est une vue analogue aux figures 1 et 3, illustrant un troisième mode de réalisation ; et
- La figure 6 est une vue analogue aux figures 2 et 4, illustrant ce troisième mode de réalisation.

Le dispositif de l'invention est conçu pour optimiser le guidage d'un étrier coulissant dans un frein à disque.

Ce dispositif comprend tout d'abord un support 1, une vis 2, et une colonnette 3 sur laquelle coulisse un étrier de frein 4.

La vis 2 présente une tête 2a par laquelle elle donne prise à un outil permettant de la visser dans un taraudage 1a du support et de la rendre fermement solidaire de ce dernier.

La colonnette 3 adopte essentiellement la forme d'un cylindre creux de révolution d'axe 3a et se trouve traversée à faible jeu, suivant sa longueur, par la vis 2 dont la tête 2a l'appuie contre le support 1 et la maintient ainsi bloquée axialement.

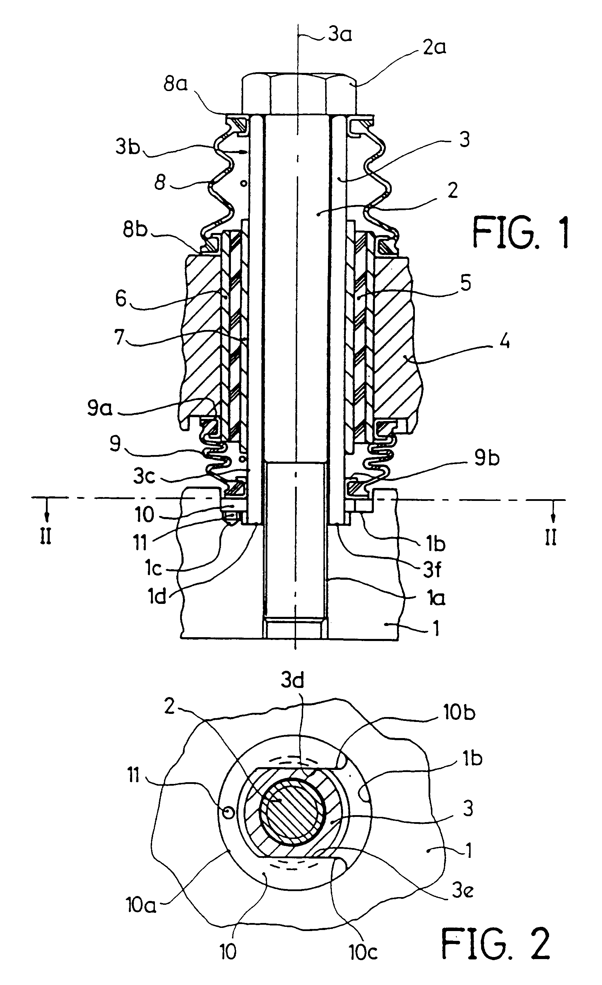

Comme illustré sur la figure 1, un "Silentbloc" 5 emprisonné entre des douilles intermédiaires 6 et 7 peut être interposé entre la colonnette 3 et l'étrier 4.

En outre, la surface externe de la colonnette 3 peut, à chacune des extrémités 3b, 3c, être protégée de la poussière et autres pollutions par des capuchons respectifs 8 et 9 constitués d'un matériau déformable et maintenus en place sur l'étrier d'une part et sur la colonnette d'autre part, au moyen de colliers métalliques 8a, 8b et 9a, 9b.

La colonnette 2 présente, à celle de ses extrémités 3c qui est tournée vers le support 1, deux méplats parallèles 3d, 3e diamétralement opposés l'un de l'autre par rapport à l'axe 3a.

Par ailleurs, le support 1 présente un alésage circulaire 1b concentrique avec le taraudage 1a.

Le dispositif de l'invention comprend en outre une bague ouverte 10 présentant un profil externe partiellement circulaire 10a se logeant à faible jeu dans l'alésage 1b et un profil interne formant deux surfaces d'appui parallèles 10b, 10c, recevant à coulissement les méplats 3d, 3e de la colonnette.

Enfin, la bague ouverte 10 est elle-même bloquée en rotation par rapport au support 1, par exemple au moyen d'un téton 11 solidaire de la bague et s'engageant dans un trou borgne complémentaire 1c du support.

Comme le montre la figure 1, les méplats 3d, 3e peuvent être pratiqués à une certaine distance de la face axiale 3f de la colonnette 3, auquel cas le support 1 présente un second alésage 1d concentrique à l'alésage 1b et plus profond que lui pour loger la partie terminale de la colonnette située entre les méplats 3d, 3e, et la face axiale 3f.

Grâce à un tel montage, la colonnette peut coulisser dans la direction des surfaces d'appui 10b, 10c tout en étant maintenue perpendiculairement à cette direction, et ne subit que des contraintes réduites.

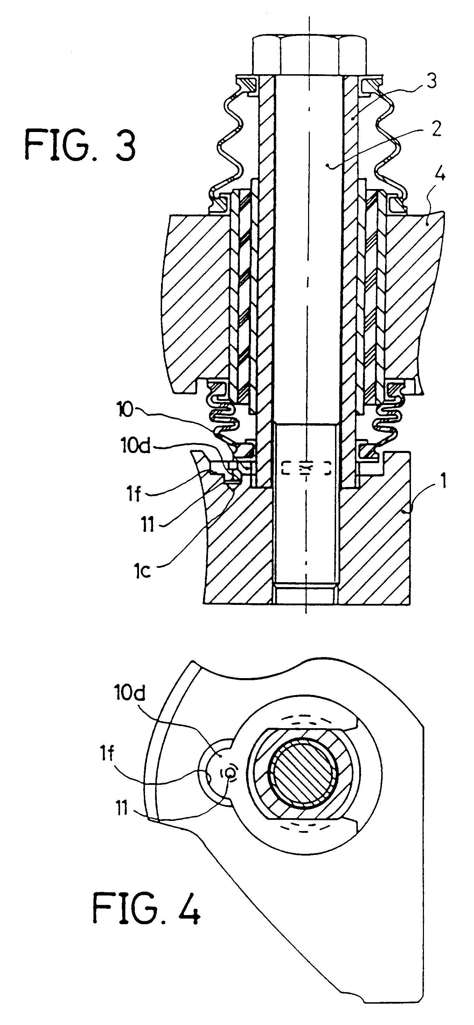

Les figures 3 et 4 représentent un autre mode de réalisation des seconds moyens de blocage, lesquels comprennent en l'occurrence en plus du téton 11 engagé dans le trou borgne 1c, une extension radiale semi-circulaire 10d de la bague ouverte 10, engagée dans une cavité 1f de forme complémentaire pratiquée dans le support 1.

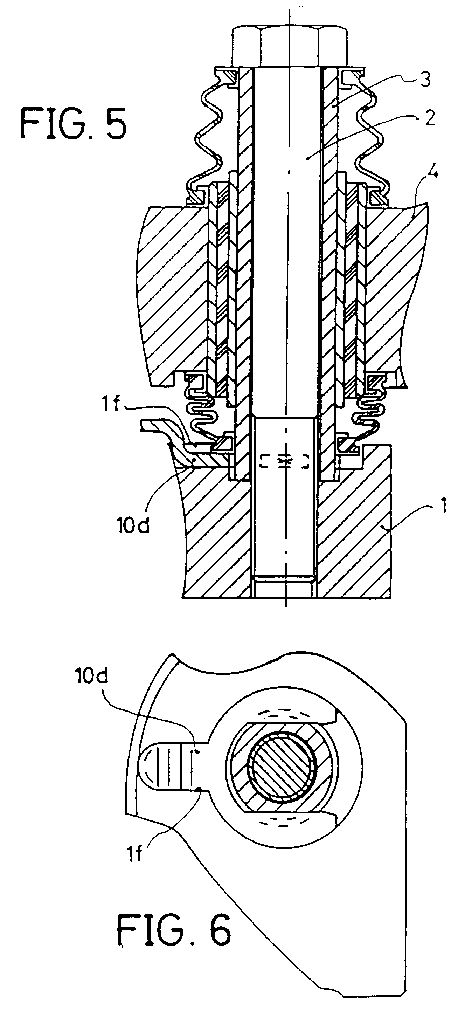

Enfin, comme le montrent les figures 5 et 6, les seconds moyens de blocage peuvent aussi ne comprendre qu'une extension radiale 10d de la bague ouverte 10, adoptant par exemple la forme d'une languette, engagée au moins partiellement dans une cavité 1f de forme complémentaire pratiquée dans le support 1.

## Revendications

1. Dispositif de guidage d'étrier coulissant (4) pour frein à disque, comprenant :
- un support (1) ;
- une vis (2) comportant une tête (2a) dont la rotation permet d'engager cette vis dans un taraudage (1a) pratiqué dans le support (1) pour la rendre solidaire de ce dernier ;
- une colonnette creuse essentiellement cylindrique (3), traversée longitudinalement et à faible jeu par la vis (2) et bloquée axialement entre le support (1) et la tête de vis (2a);
- et des premiers moyens de blocage, propres à empêcher la rotation de la colonnette (3) autour de son axe longitudinal (3a), et coopérant avec des méplats (3d, 3e) pratiqués sur la surface externe de cette colonnette (3),
caractérisé en ce que les méplats (3d, 3e) sont pratiqués à l'extrémité (3c) de la colonnette qui est tournée vers le support (1) et en ce que les premiers moyens de blocage comprennent :
- un alésage circulaire (1b) du support, concentrique avec le taraudage (1a) qui reçoit la vis (2);
- une bague ouverte (10) présentant un profil externe (10a) partiellement circulaire se logeant à faible jeu dans l'alésage du support (1), et un profil interne formant deux surfaces d'appui parallèles (10b, 10c) recevant à coulissement les méplats (3d, 3e) de la colonnette (3), et
- des seconds moyens de blocage (1c, 11 ; 1f, 10d) assurant le blocage en rotation de la bague (10) par rapport au support (1).

2. Dispositif suivant la revendication 1, caractérisé en ce que les seconds moyens de blocage comprennent une extension axiale et/ou radiale (11, 10d) s'engageant dans une cavité complémentaire (1c, 1f), l'une quelconque de l'extension et de la cavité appartenant à la bague ouverte, et l'autre au support.

3. Dispositif suivant la revendication 2, caractérisé en ce que ladite extension axiale (11) est un téton porté par la bague ouverte.

## Claims

1. Device for guiding a sliding caliper (4) for a disk-brake, comprising:
- a support (1);
- a screw (2) comprising a head (2a) whose rotation makes it possible to engage this screw in a tapped hole (1a) made in the support (1) in order to securely fasten it to the latter;
- an essentially cylindrical hollow carrier (3) traversed longitudinally and with a small clearance by the screw (2) and axially blocked between the support (1) and the screw head (2a);
- and first blocking means, suitable for preventing the rotation of the carrier (3) about its longitudinal axis (3a), and interacting with flats (3d, 3e) made on the outer surface of this carrier (3),
characterized in that the flats (3d, 3e)are made at the end (3c) of the carrier which is turned towards the support (1) and in that the first blocking means comprise:
- a circular bore (1b) of the support, concentric with the tapped hole (1a) which receives the screw (2);
- an open ring (10) having a partially circular external profile (10a) housed with a small clearance in the bore of the support (1), and an internal profile forming two parallel support surfaces (10b, 10c) slidingly receiving the flats (3d, 3e) of the carrier (3), and
- second blocking means (1c, 11; 1f, 10d) rotationally blocking the ring (10) with respect to the support (1).

2. Device according to Claim 1, characterized in that the second blocking means comprise an axial and/or radial extension (11, 10d) engaging in a complementary cavity (1c, 1f), either one of the extension and the cavity belonging to the open ring and the other to the support.

3. Device according to Claim 2, characterized in that said radial extension (11) is a stud carried by the open ring.

## Patentansprüche

1. Vorrichtung zum Führen eines gleitenden Bremssattels (4) für eine Scheibenbremse, mit:
- einem Träger (1);
- einer Schraube (2) mit einem Kopf (2a), dessen Drehung ermöglicht, diese Schraube in ein in dem Träger (1) ausgebildetes Gewinde (1a) einzubringen, um sie fest mit dem Träger zu verbinden;
- einer hohlen, im wesentlichen zylindrischen Säule (3), die in Längsrichtung und mit einem geringen Spiel von der Schraube (2) durchquert und axial zwischen dem Träger (1) und dem Kopf (2a) der Schraube festgelegt ist;
- und ersten Blockiermitteln, die geeignet sind, die Drehung der Säule (3) um ihre Längsachse (3a) zu verhindern, und die mit Abflachungen (3d, 3e) zusammenwirken, die an der Außenfläche der Säule (3) ausgebildet sind,
dadurch gekennzeichnet, daß die Abflachungen (3d, 3e) an dem dem Träger (1) zugewandten Ende (3c) der Säule ausgebildet sind und daß diese ersten Blockiermittel enthalten:
- eine kreisförmige Bohrung (1b) des Trägers, die konzentrisch zu dem die Schraube (2) aufnehmenden Gewinde (1a) ist;
- einen geöffneten Ring (10), der ein teilweise kreisförmiges Außenprofil (10a) aufweist, das mit einem geringen Spiel in der Bohrung des Trägers (1) zu liegen kommt, und ein Innenprofil, welches zwei zueinander parallele Abstützflächen (10b, 10c) bildet, welche die Abflachungen (3b, 3e) der Säule (3) gleitend aufnehmen, und
- zweite Blockiermittel (1c, 11; 1f, 10d), die den Ring (10) bezüglich des Trägers (1) gegen Drehung festlegen.

2. Vorrichtung nach Anspruch 1, dadurch gekennzeichnet, daß die zweiten Blockiermittel einen axialen und/oder radialen Fortsatz (11, 10d) umfassen, der in einen komplementären Hohlraum (1c, 1f) eingreift, wobei eines der Elemente Fortsatz und Hohlraum zu dem geöffneten Ring und das andere zu dem Träger gehört.

3. Vorrichtung nach Anspruch 2, dadurch gekennzeichnet, daß der axiale Fortsatz (11) ein von dem geöffneten Ring getragener Stift ist.
